**Europäisches Patentamt**

**European Patent Office**

**Office européen des brevets**

(11) Numéro de publication : **0 443 922 A1**

# (12) DEMANDE DE BREVET EUROPEEN

(21) Numéro de dépôt : **91400399.1**

(51) Int. Cl.⁵ : **B65H 75/34**

(22) Date de dépôt : **15.02.91**

(30) Priorité : **20.02.90 FR 9002035**

(43) Date de publication de la demande :
**28.08.91 Bulletin 91/35**

(84) Etats contractants désignés :
**AT BE CH DE DK ES FR GB GR IT LI LU NL SE**

(71) Demandeur : **ORGANISATION EUROPEENNE POUR LA RECHERCHE NUCLEAIRE (CERN) CH-1211 Geneve 23 (CH)**

(72) Inventeur : **Horne, Roger**
**26 La Vigne au Chat, Sauverny**
**F-01220 Divonne-les-Bains (FR)**

(74) Mandataire : **Gorree, Jean-Michel et al**
**Cabinet Plasseraud 84, rue d'Amsterdam**
**F-75009 Paris (FR)**

(54) **Dispositif de compensation de rotation pour un câble ou analogue enroulable et déroulable sur un tambour rotatif.**

(57)     Entre un tambour rotatif (2) supportant un tronçon de câble (1) enroulable ou déroulable et un support fixe (4) ayant un tronçon fixe de câble (5), on interpose un dispositif (6) de compensation de rotation coaxial au tambour et renfermant un tronçon intermédiaire de câble (13) enroulé en plusieurs spirales successives côte-à-côte et coaxial à l'axe du tambour, toutes de même sens d'enroulement et enroulées alternativement du centre vers la périphérie pour une spirale et de la périphérie vers le centre pour la spirale suivante, l'extrémité libre de la première spirale étant fixe par rapport au support fixe (4) et l'extrémité libre de la dernière spirale étant solidaire du tambour, une spirale données pouvant être accouplée en rotation avec une spirale voisine donnée lorsque ladite spirale donnée a effectué un nombre préétabli de tours de rotation.

EP 0 443 922 A1

# FIG.1.

## DISPOSITIF DE COMPENSATION DE ROTATION POUR UN CABLE OU ANALOGUE ENROULABLE ET DEROULABLE SUR UN TAMBOUR ROTATIF

La présente invention concerne un dispositif de compensation de rotation pour lien souple, tel qu'un câble ou analogue, notamment un câble de transmission de signaux, enroulable et déroulable sur un tambour rotatif qui peut effectuer un nombre prédéterminé de tours de rotation dans un sens et dans l'autre autour d'un arbre fixe, ledit dispositif comportant un tronçon de câble de longueur donnée enroulé en plusieurs spirales successives entourant chacune l'arbre fixe et disposées côte-à-côte, les sens d'enroulement de ces spirales étant tous identiques et les enroulements s'effectuant alternativement du centre vers la périphérie pour une spirale et de la périphérie vers le centre pour la spirale voisine, l'extrémité libre de la première spirale étant fixe par rapport à l'arbre fixe et l'extrémité libre de la dernière spirale étant solidaire du tambour rotatif et raccordée au câble enroulé sur ledit tambour, et des moyens d'accouplement temporaires étant prévus pour accoupler en rotation une spirale donnée avec la spirale de rang immédiatement précédent (considéré dans l'ordre à partir de la spirale raccordée au tambour rotatif) lorsque, au cours de la rotation du tambour rotatif, ladite spirale donnée a effectué un déplacement angulaire prédéterminé.

Un tel dispositif trouve une application particulièrement intéressante, bien que non exclusive, dans le cas de câbles de transmission de signaux, et notamment dans le cas de tels câbles incorporant des fibres optiques ou constitués de fibres optiques.

Lorsqu'on dispose d'un câble (électrique, optique, etc.) ou analogue (par exemple un tuyau dans lequel circule un fluide) enroulale ou déroulable sur un tambour rotatif de manière que la longueur utile du câble puisse être ajustée à volonté, il se pose le problème crucial d'assurer une liaison fiable et efficace entre ce câble enroulable et déroulable sur le tambour et un câble de même nature, mais fixe, situé en amont du tambour.

Dans le cas où le câble assure une liaison unique, cette liaison peut être réalisée par des moyens bien connus disposés en général au niveau de l'axe de rotation du tambour : joint tournant dans le cas d'un tuyau, contact tournant dans le cas d'un conducteur électrique, connecteur optique tournant dans le cas d'une liaison optique (fibre optique) monovoie.

Dans le cas où le câble assure des liaisons multiples en petit nombre (par exemple deux ou trois), les mêmes solutions technologiques que précédemment peuvent encore être retenues en multipliant le nombre des organes de connexion. Par contre, dans le cas où le câble assure des liaisons multiples en grand nombre, une multiplication des organes de connexion s'avère impossible car leur nombre important entraînerait des sujétions d'encombrement, de coût et de fiabilité difficilement surmontables dans la plupart des applications courantes.

Par ailleurs, l'emploi d'organes de connexion peut être indésirable dans certains domaines d'application et il est alors souhaitable que le câble fixe s'étendant en amont du tambour et le câble enroulé sur le tambour ne soient que deux parties d'un même câble unitaire. Une telle sujétion se présente notamment dans le domaine de la transmission d'informations par câble optique, car les connecteurs optiques introduisent immanquablement des pertes qui peuvent ne pas être toujours acceptables.

Pour tenter de résoudre ces problèmes, il a déjà été proposé (brevet GB 1 071 784) d'associer au tambour, entre le câble enroulé sur celui-ci et le câble fixe s'étendant en amont, un dispositif de compensation de rotation comportant un tronçon de câble de longueur donnée enroulé en plusieurs spirales successives autour de l'arbre fixe supportant le tambour, comme mentionné dans le premier paragraphe ci-dessus ; une extrémité de l'une des spirales extrêmes (par exemple son extrémité interne) est solidaire de l'arbre fixe et est raccordée au câble fixe situé en amont, tandis qu'une extrémité de l'autre spirale extrême (par exemple son extrémité externe) est solidaire du tambour en se déplaçant avec celui-ci et est raccordée au câble enroulé sur le tambour.

Le tronçon de câble enroulé en spirales à l'intérieur du dispositif de compensation de rotation se comporte donc comme un ressort de montre, les spirales se détendant ou se contractant au gré de la rotation du tambour en fonction du sens de rotation de celui-ci.

Bien que ce dispositif connu permette de résoudre les problèmes précités -il est notamment possible que la totalité du câble (câble situé en amont, câble enroulé en spirale, câble enroulé sur le tambour) soit unitaire, ce qui élimine la nécessité de recourir à des connecteurs d'accouplement-, il présente toutefois l'inconvénient majeur que chaque spirale n'autorise tout au plus qu'un unique tour de rotation du tambour. Il faut donc mettre en oeuvre des spirales en nombre égal au nombre de tours de rotation prévus pour le tambour. Il en résulte que le dispositif devient encombrant et coûteux, et l'importance des frottements mécaniques cumulés devient rapidement prohibitive. En pratique, il n'est guère possible de dépasser la vingtaine de spirales, et donc la rotation du tambour reste limitée corrélativement à une vingtaine de tours, ce qui ne permet pas de satisfaire les exigences de bon nombre d'applications pratiques.

L'invention a donc essentiellement pour objet de proposer un dispositif perfectionné, mettant en oeuvre l'enroulement en spirale du câble connu précité, qui, étant interposé entre le câble fixe situé en amont du tambour et le câble enroulable sur le tambour, autorise un plus grand nombre de tours de rotation du tambour que ne le permet le dispositif antérieur ; qui permette un ajustement du nombre de tours de rotation du tambour d'une manière simple en fonction des utilisations particulières envisagées ; qui puisse être mis en oeuvre avec n'importe quel type de câble ou analogue, y compris avec des câbles à fibres optiques qui sont fragiles et ne supportent pas d'effort de traction important ; y compris de plus des câbles plats à fibres optiques qui ne supportent pas d'effort de torsion important ; et qui enfin, dans un mode de réalisation particulier, autorise un nombre quelconque, y compris infini, de tours de rotation du tambour quel que soit le sens de rotation de celui-ci.

A ces fins, l'invention propose un dispositif de compensation de rotation du type défini au préambule qui se caractérise essentiellement en ce que les autres extrémités respectivement de la première et de la dernière spirales et les extrémités des spirales intermédiaires sont solidaires de supports flottants réunissant les extrémités correspondantes de deux spirales voisines au voisinage de l'arbre fixe pour les extrémités intérieures des spirales et à la périphérie externe pour les extrémités extérieures des spirales, et en ce que les susdits moyens d'accouplement temporaires sont agencés pour que l'accouplement en rotation de ladite spirale donnée avec la spirale de rang immédiatement inférieur intervienne lorsque ladite spirale donnée a effectué un nombre préétabli, supérieur ou égal à deux, de tours de rotation.

Grâce à cet agencement, le nombre prédéterminé de tours de rotation susceptibles d'être effectués par le tambour est constitué par le cumul des nombres préétablis individuels de tours de rotation autorisés par toutes les spirales. En particulier, si, comme cela devrait être la règle dans un souci de simplification de la structure et de réduction du coût du dispositif, toutes $N$ les spirales sont constituées de façon identique avec le même nombre de tours d'enroulement du câble, le nombre prédéterminé de tours de rotation du tambour sera $N$ fois le nombre préétabli de tours autorisé par une seule spirale.

En outre, le choix d'un nombre approprié $N$ de spirales permet d'ajuster le nombre prédéterminé de tours de rotation du tambour en fonction des exigences des utilisations individuelles. Une structure mécanique modulaire simple telle que celle qui sera indiquée plus loin permet d'effectuer facilement cet ajustement.

De façon très avantageuse, les supports flottants sont agencés pour que les extrémités correspondantes de deux spirales voisines, situées au voisinage de l'arbre fixe pour les extrémités intérieures des spirales ou situées à la périphérie externe pour les extrémités extérieures des spirales, soient reliées entre elles par des portions du câble enroulées en boucle sensiblement hélicoïdale. De la sorte, le câble ne présente en aucun endroit des pliures ou courbures de rayon trop faible et un tel agencement peut parfaitement convenir pour des câbles constitués de fibres optiques ou incorporant des fibres optiques qui sont très fragiles de ce point de vue et se rompent facilement. En outre cet agencement est également approprié pour des câbles plats pour lesquels on souhaite éviter des torsions et qui doivent se développer à plat tout au long de leur étendue, a fortiori lorsque ces câbles plats sont des câbles plats à fibres optiques constitués par plusieurs (par exemple huit ou dix) fibres optiques disposées côte-à-côte parallèlement les unes aux autres en étant enrobées dans une gaine protectrice unique.

Quel que soit le type de câble de transmission utilisé, il n'est en principe pas souhaitable de le soumettre à des efforts de traction répétés, ce pour quoi la plupart des câbles de transmission ne sont pas adaptés. C'est tout particulièrement le cas pour les câbles à fibres optiques. Il est donc prévu, dans le dispositif de l'invention, que le déroulement d'une spirale ne soit pas effectué de façon totale, mais arrêté avant son déroulement total afin d'éviter un endommagement des éléments actifs du câble. A cette fin, des moyens d'accouplement temporaire sont associés des moyens de comptage-décomptage aptes à compter le nombre de tours de rotation effectués, dans un sens ou dans l'autre, par une spirale donnée dans la limite de son nombre de tours préétabli.

Compte tenu de ce qui précède, on conçoit que le dispositif de l'invention procure la possibilité de mettre en oeuvre un câble unitaire, c'est-à-dire que le câble fixe situé en amont du tambour et raccordé à l'extrémité de la première spirale solidaire de l'arbre fixe, le tronçon de câble enroulé en plusieurs spirales dans le dispositif et le câble enroulable sur le tambour rotatif sont alors différentes parties d'un seul et même câble. Ainsi se trouve éliminé l'organe de liaison interposé entre le câble fixe et le câble enroulé sur le tambour dans les agencements antérieurs, et les inconvénients inhérents à la présence de cet organe de liaison (pertes dans les connecteurs optiques en particulier) sont écartés.

Dans un mode de réalisation préféré, chaque spirale est enfermée dans une cassette de forme générale discoïdale présentant une chambre intérieure annulaire délimitée par deux parois latérales annulaires et deux parois périphériques respectivement intérieure et extérieure, les deux parois latérales étant mutuellement écartées d'une distance correspondant approximativement à la dimension transversale du câble et les deux parois périphériques étant munies d'une lumière ou analogue agencée pour le passage et le blocage du câble la traversant.

Pour obtenir une structure modulaire permettant d'adapter facilement le nombre de spirales à la longueur de déroulement maximale souhaitée pour le câble enroulé sur le tambour, il est souhaitable que les cassettes soient constituées toutes de façon identique par empilement d'organes qui pourront alors être fabriqués en série, de manière à diminuer les coûts de fabrication.

Ainsi, il est intéressant que les deux parois latérales délimitant une chambre appartiennent à deux pièces distinctes, indépendantes l'une de l'autre en rotation. Dans ce cas, on peut faire en sorte que chaque pièce présente deux faces annulaires principales qui sont parallèles et qui constituent des parois latérales de deux chambres consécutives. Ainsi, dans un exemple de réalisation préféré, l'empilement mentionné plus haut peut être constitué à l'aide de pièces qui sont alternativement :

– des roues montées à libre rotation sur l'arbre fixe et dont les faces latérales sont creusées pour définir une paroi latérale et la paroi périphérique extérieure de respectivement deux chambres

– et des espaceurs annulaires interposés entre deux roues consécutives et montés sur l'arbre fixe à libre rotation par rapport à celui-ci et par rapport aux deux roues qui l'encadrent, les faces latérales des espaceurs constituant les parois latérales de deux chambres consécutives appartenant à deux roues différentes.

De façon intéressante, les roues possèdent des moyeux élargis, aboutés longitudinalement, et chaque espaceur entoure les moyeux aboutés de deux roues consécutives. De même on peut prévoir que chaque espaceur possède un moyeu plus épais que sa partie discoïdale, lequel moyeu définit la paroi périphérique interne de chaque chambre. On obtient ainsi une structure à organes emboîtés qui est particulièrement compacte et qui peut aisément conduire à un dispositif de petites dimensions.

Dans la structure à organes emboîtés qui est ainsi définie, il est possible de faire en sorte qu'entre les moyeux coopérant des espaceurs et des roues soient interposés des manchons et que le moyeu de chaque espaceur et chaque manchon associés soient mutuellement configurés de manière à définir entre eux une cavité annulaire dans laquelle s'ouvrent les deux lumières de passage du câble prévues respectivement dans les parois périphériques internes de deux chambres situées de part et d'autre d'un même espaceur, le câble s'étendant, entre les deux dites lumières, à l'intérieur de cette cavité annulaire en une boucle hélicoïdale ou un tronçon de boucle hélicoïdale. On définit ainsi, en tout point du câble, des rayons de courbure suffisants pour empêcher son endommagement et/ou autoriser son fonctionnement correct.

De façon avantageuse, la surface périphérique externe de chaque roue est creusée d'une gouttière hélicoïdale s'étendant entre les deux lumières ou analogues traversant les parois périphériques extérieures des deux chambres consécutives définies par cette roue. De préférence, chaque roue est alors entourée par une bague de protection obturant la gouttière et solidaire de la roue.

Dans une réalisation simple, les moyens d'indexage du nombre de tours d'une roue par rapport à la roue de rang précédent comprennent un organe d'indexage et un organe de commande de celui-ci supportés respectivement par l'espaceur et la roue adjacente à celui-ci. En outre, il est possible d'envisager un entraînement progressif de toutes les roues lors de la rotation du tambour ; à cette fin, les moyens de comptage-décomptage comprennent en outre des moyens démultiplicateurs agencés pour qu'un espaceur soit entraîné en rotation par la roue de rang suivant, à une vitesse inférieure à celle de cette dernière ; dans un exemple de réalisation, les moyens démultiplicateurs sont agencés de la façon suivante :

– les bagues de protection des roues sont dentées extérieurement, et

– chaque espaceur supporte deux roues dentées engrenant l'une avec l'autre et respectivement avec les bagues dentées des deux roues situées de part et d'autre de l'espaceur,

pour former un accouplement différentiel dans lequel l'espaceur tourne à une vitesse réduite dans un rapport prédéterminé par rapport à la roue qui l'entraîne.

Enfin, le dispositif de compensation conforme à l'invention se révèle par ailleurs particulièrement intéressant dans la mesure où il permet d'envisager la compensation, non plus seulement d'un nombre prédéterminé de tours de rotation du tambour, mais d'un nombre indéterminé, aussi grand soit-il, de tours de rotation, dans un sens ou dans l'autre. Un tel dispositif peut trouver application par exemple lorsque la longueur du câble enroulable et déroulable sur le tambour est très importante et qu'un dispositif conforme aux dispositions précédemment exposées incorporerait un nombre considérable de spirales conduisant à un encombrement et à un coût prohibitif.

A cette fin, l'invention propose un dispositif de compensation de rotation pour un câble ou analogue, notamment un câble de transmission de signaux, enroulable et déroulable sur un tambour rotatif qui peut effectuer un nombre indéterminé de tours de rotation dans un sens ou dans l'autre autour d'un arbre fixe, caractérisé en ce qu'il comporte :

– deux dispositifs primaires de compensation de rotation constitués chacun comme décrit plus haut et prévus chacun pour compenser un nombre prédéterminé de tours de rotation du tambour, ces deux dispositifs étant montés sur l'arbre fixe du tambour,

– des premiers moyens de jonction pour raccorder le câble fixe situé en amont du tambour aux extrémités libres des deux premières spirales fixes appartenant respectivement aux deux dispositifs primaires,

– des seconds moyens de jonction pour raccorder le câble enroulé sur le tambour aux extrémités libres des deux dernières spirales entraînées par le tambour et appartenant respectivement aux deux dispositifs primaires,

– deux organes de connexion amovibles pour raccorder les deux câbles issus des premiers moyens de jonction respectivement aux deux spirales correspondantes,

– deux moyens moteurs aptes à faire tourner respectivement les deux dispositifs primaires,

– et des moyens de commande agencés pour, lorsque le tambour est entraîné en rotation avec un nombre de tours excédant la capacité de compensation d'un des dispositifs primaires,

   \* déconnecter l'organe de connexion de ce dispositif primaire en même temps que l'organe de connexion de l'autre dispositif primaire est connecté de manière à assurer la continuité du circuit,

   \* pendant que l'autre dispositif primaire compense la rotation du tambour, mettre en marche les moyens moteurs du dispositif primaire parvenu en fin de course pour le ramener à sa capacité de compensation maximale compte tenu du sens de rotation du tambour,

   \* inverser les fonctionnements lorsque l'autre dispositif primaire parvient à son tour en fin de capacité de compensation,

   \* et poursuivre en mettant en fonction alternativement l'un, puis l'autre dispositif primaire tandis que celui qui n'est pas en fonction est ramené en position initiale.

L'invention sera mieux comprise à la lecture de la description détaillée qui suit de certains modes de réalisation préférés, donnés uniquement à titre d'exemples non limitatifs. Dans cette description, on se réfère aux dessins annexés sur lesquels :

– la figure 1 est une vue d'ensemble, en coupe diamétrale, d'un dispositif de compensation de rotation agencé conformément à l'invention ;

– la figure 2 est une vue, à plus grande échelle, d'une partie de la fig. 1 ;

– les figures 3 et 4 sont des vues schématiques à encore plus grande échelle montrant, en perspective, des détails de constitution du dispositif des fig. 1 et 2 ;

– les figures 5 et 6 sont des vues schématiques à encore plus grande échelle montrant en perspective, d'autres détails de constitution du dispositif des fig. 1 et 2 ;

– la figure 7 est une vue schématique de côté montrant une partie du dispositif de la fig. 1 avec, en position, ceux des détails de constitution représentés aux figures 5 et 6 ; et

– la figure 8 est une vue schématique d'un autre mode de réalisation conforme à l'invention.

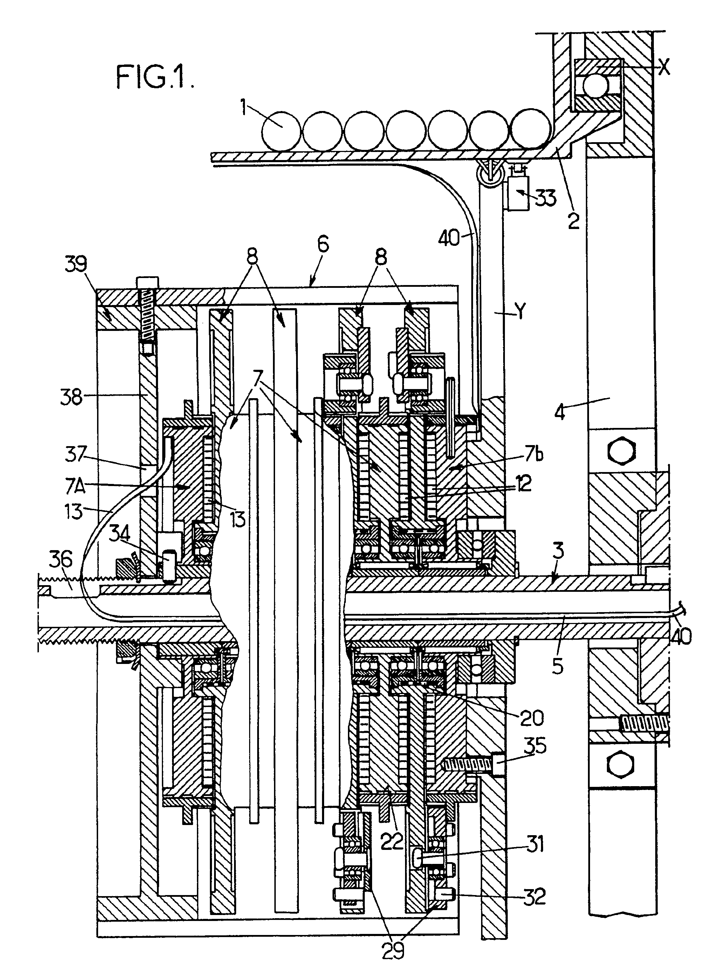

En se référant tout d'abord à la fig. 1, un lien souple 1 de longueur efficace variable, est associé à un tambour rotatif 2 de manière à pouvoir être enroulé sur celui-ci ou en être déroulé. Le tambour est monté tournant autour d'un arbre fixe 3 solidaire d'une structure de support 4. La rotation du tambour 2 peut être provoquée soit par des moyens moteurs associés, soit simplement par une traction exercée sur l'extrémité libre du lien souple 1 si la résistance mécanique de celui-ci l'autorise.

Dans le dispositif représenté dans son ensemble à la fig. 1, le tambour 2 peut avoir un poids élevé (par 300 kg) qui conduit à recourir à un montage mécaniquement robuste. A cet effet, le tambour 2 n'est pas supporté par l'arbre 3 autour duquel il tourne, mais il est supporté, par l'intermédiaire d'un palier annulaire X équipé de roulements à billes ou à rouleaux, par la structure fixe 4 (seule une partie du palier annulaire X et visible sur la fig. 1).

Un lien souple fixe 5, cheminant par exemple à l'intérieur de l'arbre 3 réalisé sous forme creuse ou tubulaire, doit être raccordé au câble 1, en étant de préférence réalisé sous forme unitaire avec celui-ci. Le dispositif de compensation de rotation, désigné dans son ensemble par la référence 6, conforme à l'invention est interposé entre le tambour 2 et l'arbre 3 pour assurer cette fonction.

Dans la description qui suit, on suppose que le lien souple est un câble et plus particulièrement un câble à fibres optiques, notamment du type plat, car, compte tenu des caractéristiques mécaniques et optiques des fibres, il semble que le dispositif de l'invention soit particulièrement intéressant et avantageux dans ce cas. Toutefois, on comprendra que les dispositions de l'invention ne sont pas tributaires de ce type spécifique de câble, et que le dispositif de l'invention peut parfaitement être associé à des câbles électriques, des câbles mixtes électriques-optiques, voire des tuyaux ou conduites de fluide de liaisons pneumatiques ou hydrauliques.

Comme visible à la fig. 1, le dispositif de compensation de rotation 6 est constitué essentiellement par un empilement de roues 7 et d'espaceurs 8 coaxiaux à l'arbre 3 qui les supporte et juxtaposés en alternance.

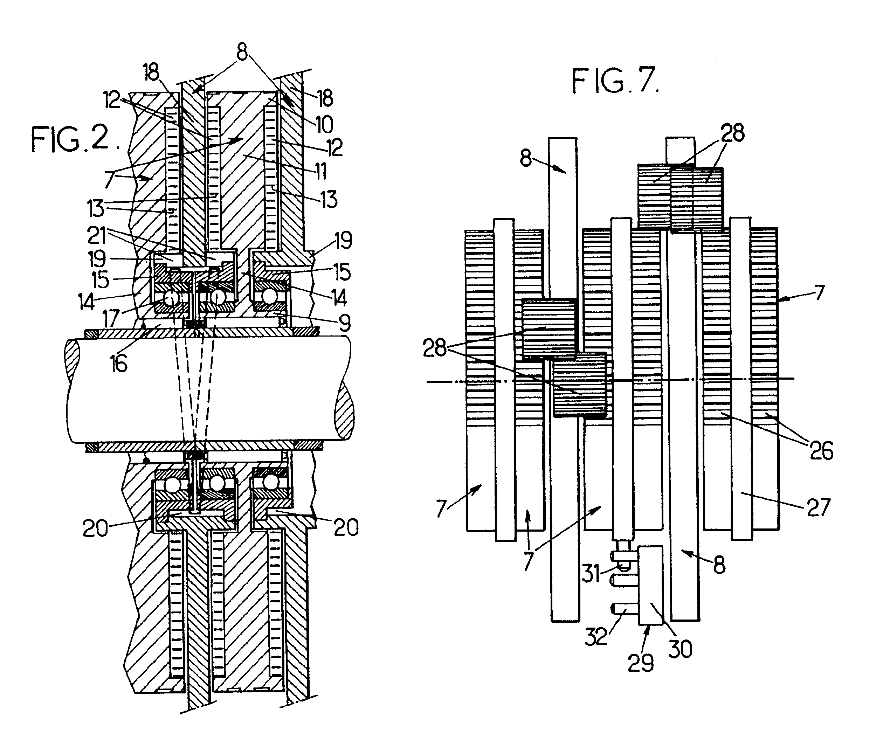

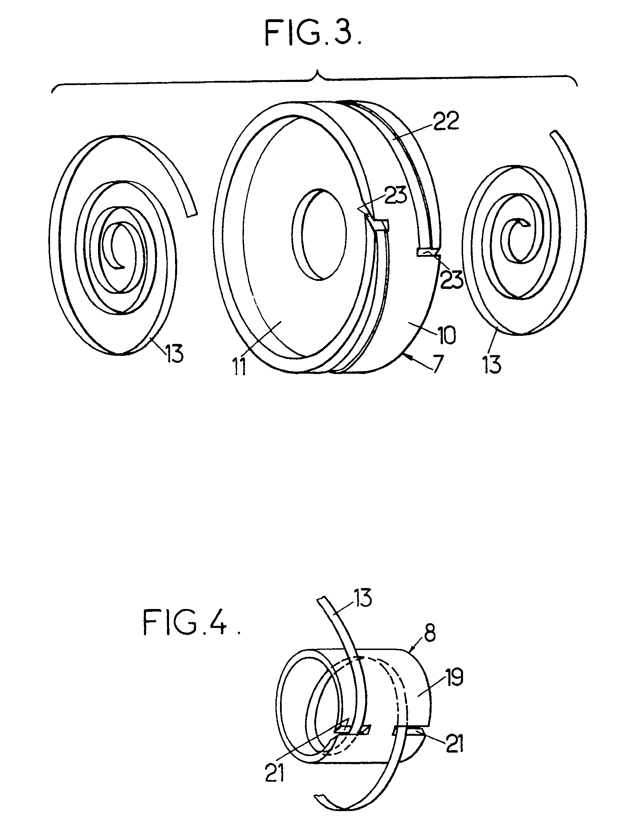

Comme on le voit mieux aux fig. 2 et 3, chaque roue 7 comporte un moyeu large 9 (non représenté à la fig. 3), une jante également large 10 et un voile intermédiaire 11 d'épaisseur réduite qui définissent deux cavités annulaires respectivement sur les deux faces de la roue. Ces cavités en association avec la face de l'espaceur juxtaposé constituent des chambres annulaires 12 à parois parallèles (constituées par la paroi de fond de la cavité et la face de l'espaceur) dans chacune desquelles est abritée une portion du câble 13 enroulée en spirale comme cela sera indiqué plus loin.

Le voile 11 de chaque roue présente, au voisinage du moyeu 9, une portion annulaire amincie 14 jouant le rôle de butée axiale et définissant des épaulements de retenue radiale pour des manchons 15. Ces manchons entourent les parties élargies des moyeux 9 et ont une longueur telle qu'ils assurent un écartement convenable entre deux roues successives de manière que l'on puisse intercaler entre elles, sans frottement notable, un disque espaceur 8.

On notera qu'entre les moyeux 9 et l'arbre 3 qu'ils entourent sont interposés des roulements 16, par exemple des roulements à aiguilles, tandis que d'autres roulements 17, par exemple des roulements à billes, sont interposés entre les moyeux 9 des roues et les manchons 15.

Comme représenté aux figures 1 et 2, chaque espaceur 8 se présente sous la forme générale d'un disque 18 à faces parallèles muni d'un moyeu élargi 19 qui entoure le manchon 15 en prenant appui sur celui-ci, la longueur du moyeu 19 étant sensiblement égale à celle du manchon.

Par ailleurs, les surfaces annulaires coopérantes du manchon 15 et du moyeu 19 sont agencées pour définir entre elles un logement annulaire 20 qui s'étend axialement jusqu'à l'aplomb des deux chambres 12 situées de part et d'autre de cet espaceur. Par exemple, pour constituer un tel logement 20, la surface externe du manchon 15 est creusée d'une gorge annulaire et le moyeu 19 de l'espaceur prend appui sur les rebords délimitant latéralement cette gorge (voir fig. 2).

Enfin, comme on le voit mieux à la fig. 2 et surtout à la figure 3, la paroi du moyeu 19 de chaque espaceur 8 est percée de deux lumières (par exemple deux fentes) de passage 21 situées en regard des deux chambres 12 respectivement et faisant communiquer celle-ci avec le logement annulaire 20. Ces deux lumières 21 peuvent être situées sensiblement dans l'alignement l'une de l'autre.

On notera ici que l'épaisseur des chambres 12 - autrement dit la distance entre les faces planes en regard appartenant au fond de chaque cavité des roues 7 et aux espaceurs 8- est déterminée en fonction de la dimension transversale du câble 13 de manière à être un peu supérieure à cette dimension transversale afin que le câble soit maintenu enroulé en spirale à l'intérieur des chambres.

Comme visible à la fig. 3, la surface périphérique externe des jantes 10 des roues 7 est creusée d'une gorge hélicoïdale 22 s'enroulant approximativement sur un tour d'hélice. Aux extrémités de cette gorge sont prévues deux lumières 23 traversant l'épaisseur de la jante 10 et faisant communiquer la gorge 22 avec respectivement les deux chambres 12 définies de part et d'autre du voile 11 de cette roue.

Enfin les roues 7 et les espaceurs 8 sont accouplés entre eux de manière à constituer un dispositif différentiel. A cette fin, la jante 10 de chaque roue reçoit une couronne 24 qui lui est solidarisée par une goupille 25. La surface intérieure de cette couronne épouse étroitement la surface externe de la jante 10 et clôt ainsi la gorge hélicoïdale 22. De plus, la surface externe de la couronne 24 est dentée (en 26) ; de préférence, les dentures sont réparties en deux anneaux dentés 26 séparés par une saillie annulaire 27.

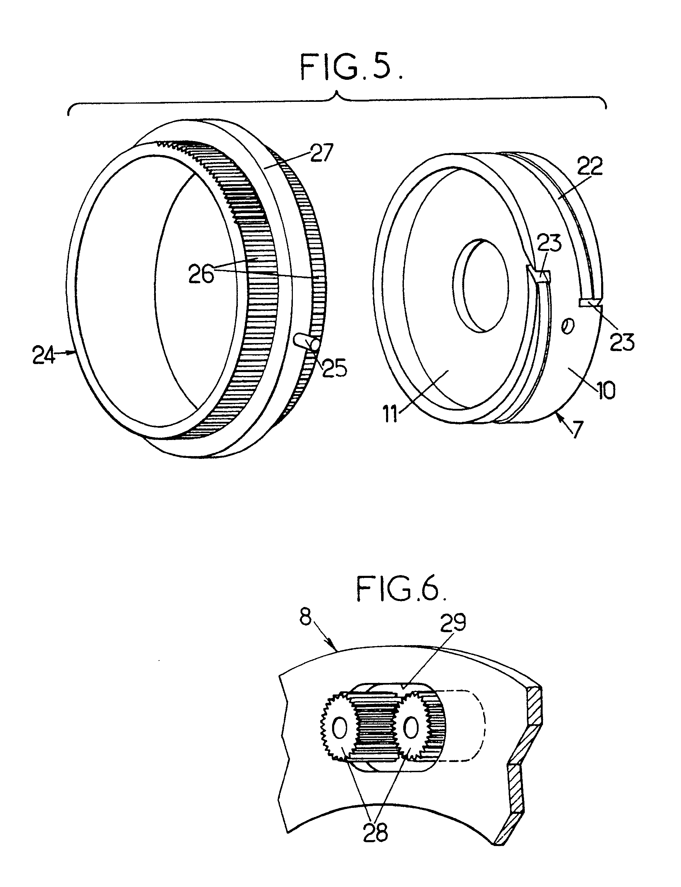

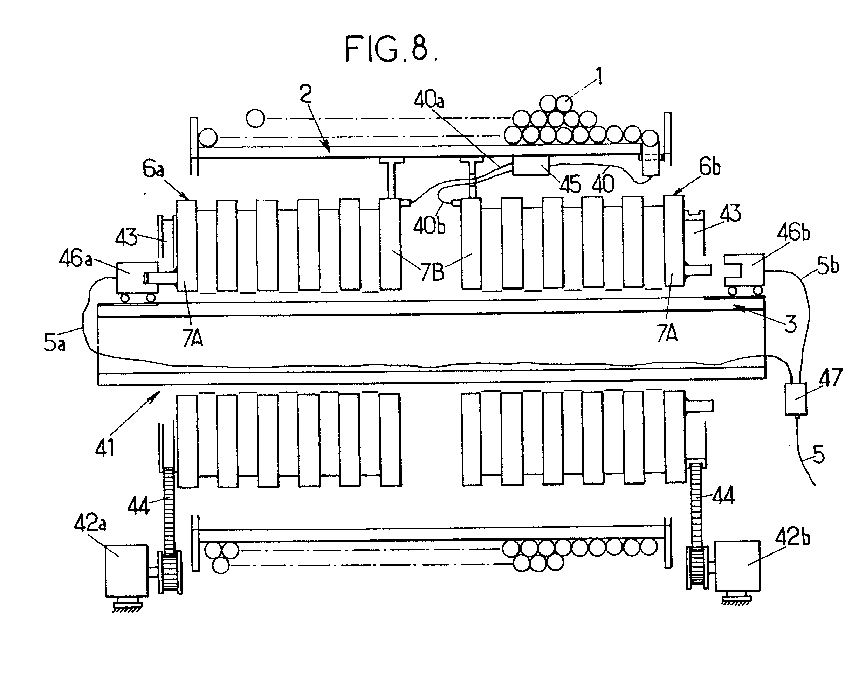

De façon correspondante, chaque espaceur 8 est muni, au voisinage de sa périphérie externe, d'une paire de pignons 28 supportés par l'espaceur ; comme représenté à la figure 6, ces pignons 28 sont logés dans une lumière 29 de l'espaceur 8 et sont décalés l'un par rapport à l'autre de manière que, tout en engrenant l'un avec l'autre, ils engrènent également avec l'anneau denté 26 situé respectivement sur les deux roues 7 disposées de part et d'autre de l'espaceur. La figure 7 montre, de façon schématique, un tel dispositif différentiel constitué avec un empilement de trois roues 7 et de deux espaceurs 8, mutuellement accouplés par deux paires de pignons 28.

Un tel agencement fixe une relation de rotation entre les roues et les espaceurs de manière que, lorsqu'une roue effectue un nombre donné de rotation (par exemple 24) par rapport à la roue voisine, l'espaceur qui les sépare est astreint à effectuer un nombre fixe de rotations (par exemple 12) dans le même sens.

En revenant maintenant à la fig. 1, on notera ici que la première roue 7A du dispositif (celle située à gauche sur la figure 1) est fixe et par exemple solidarisée à l'arbre 5 par un système de clavette 34. A l'autre extrémité, la dernière roue 7B (celle située à droite sur la figure 1) est solidaire en rotation du tambour 2. Dans l'exemple représenté à la fig. 1, cette roue 7B est solidarisée par un ou plusieurs boulons d'accouplement 35 à un flasque discoïdal Y rendu solidaire en rotation du tambour 2 d'une manière et dans un but qui seront précisés plus loin.

Pour fixer la rotation de chaque roue par rapport à l'espaceur voisin au nombre de tours maximum prévu, on prévoit des moyens d'accouplement temporaire qui permettent un transfert en cascade du mouvement de rotation au fur et à mesure que les spirales successives ont été totalement enroulées ou déroulées, selon le sens de la rotation. A cet effet, chaque espaceur 8 porte une robuste roue à index 29 et un mécanisme de comptage-décomptage et de butée de fin de course 30, qui sont actionnés par un doigt 31 saillant radialement (qui peut du reste être un prolongement de la susdite goupille 25) prévu sur la saillie annulaire 27 de la roue 7 adjacente (voir fig. 7). A chaque passage de ce doigt 31 devant la roue à index 29, le doigt 31 coopère avec un index 32 de celle-ci et la fait tourner d'un pas. Après un nombre prédéterminé de passages, et donc de pas de rotation de la roue à index 29 (par exemple 12 dans l'exemple précédemment envisagé), dans un même sens de rotation, le mécanisme 30 se bloque, ce qui solidarise le couple roue-espaceur au couple roue-espaceur suivant. Chaque mécanisme de butée doit donc être réalisé de manière suffisamment robuste pour qu'il puisse transmettre les efforts d'entraînement ; lorsque le dispositif est presque entièrement enroulé, le mécanisme de butée du premier couple roue-espaceur entraîne la totalité des autres couples et transmet donc la totalité de l'effort d'entraînement en rotation, en surmontant tous les frottements cumulés.

A titre de sécurité, le flasque discoïdal Y est solidarisé au tambour 2 par l'intermédiaire d'un dispositif d'accouplement incluant un capteur de force 33 ; l'effort d'entraînement permettant de surmonter les frottements du dispositif en rotation est mesuré par ce capteur de force 33 qui est associé à un interrupteur inséré dans la ligne d'alimentation électrique du mécanisme moteur provoquant le déroulement du câble et/ou qui est associé à une alarme. Si cet effort d'entraînement excède un niveau prédéterminé, l'entraînement du tambour est interrompu et/ou l'alarme est déclenchée.

Dans la structure qui vient d'être décrite, le câble est disposé de la manière qui suit.

La partie fixe 5 du câble parvient dans le dispositif compensateur 6 par l'intérieur de l'arbre fixe 3 réalisé sous forme creuse (tubulaire) et, par des ouvertures 36 et 37 réalisées respectivement dans l'arbre 3 et un flasque 38 d'un carter 39 de protection du dispositif compensateur 6, pénètre dans la chambre annulaire 12 en regard de la première roue 7A qui est fixe (voir fig. 1). Par la lumière 23 correspondante dans laquelle par ailleurs il est bloqué pour empêcher son déplacement longitudinal, le câble (tronçon 13) passe dans la gorge hélicoïdale 22, puis pénètre dans la chambre annulaire 12 voisine, dans laquelle il est enroulé en spirale avec un nombre prédéterminé de tours d'enroulement (voir fig. 3), depuis la périphérie externe de la chambre jusqu'à sa paroi centrale. Là, le câble 13 passe, par la lumière 21 correspondante dans laquelle par ailleurs il est bloqué pour empêcher son déplacement longitudinal, dans le logement annulaire 20 intérieur au moyeu 19, à l'intérieur duquel il forme une boucle hélicoïdale ressortant par la lumière 21 voisine dans laquelle il est également bloqué (voir fig. 4). Il pénètre alors dans la chambre annulaire 12 de la roue voisine 7 située de l'autre côté de l'espaceur 8 solidaire du moyeu 19 précité. Dans cette chambre, le tronçon 13 du câble est enroulé en spirale de l'intérieur vers l'extérieur de la chambre, qu'il quitte par la lumière 23 (voir fig. 3). Et ainsi de suite jusqu'à la dernière roue 7B qui est solidaire du tambour 2 et que le câble quitte sous forme d'un tronçon de raccordement 40, par exemple fixé sur la structure du tambour, pour se raccorder au câble 1 enroulé sur le tambour.

D'après ce qui précède, on comprend que le dispositif de l'invention permet :
d'une part d'assurer la rotation du tambour 2 par rapport à l'arbre fixe 3 sur un nombre prédéterminé de tours, sans dommage pour le câble
et, d'autre part, de constituer le câble sous forme unitaire, en intégrant la partie 1 enroulée sur le tambour, le tronçon de raccordement 40, le tronçon 13 intérieur au dispositif compensateur 6, et le tronçon fixe 5 ; cet avantage est particulièrement appréciable dans le cas d'un câble à fibres optiques, car il évite le recours à des connecteurs optiques qui affaiblissent la qualité des signaux transmis.

En outre, le dispositif compensateur conforme à l'invention permet également de concevoir un appareil plus élaboré apte à autoriser la rotation du tambour par rapport à l'arbre fixe, sur un nombre quelconque de tours dans un sens donné, y compris sur un nombre infini de tours.

Un tel appareil, désigné dans son ensemble par la référence numérique 41 à la fig. 8 (sur laquelle les éléments identiques à ceux des figures 1 à 7 sont désignés par les mêmes références), comporte deux dispositifs compensateurs 6a et 6b (représentés de manière très schématique) disposés l'un à la suite de l'autre sur l'arbre 3. De même que précédemment, les roues extrêmes 7B respectives des dispositifs compensateurs sont solidaires mécaniquement du tambour 1. Par contre, les roues extrêmes opposées 7A ne sont plus solidaires de l'arbre fixe 5, mais sont libres en rotation autour de celui-ci et accouplées respectivement à des moyens moteurs 42 ; par exemple chaque roue 7A est solidaire d'une poulie 43 entraînée par le moteur 42 à l'aide d'une courroie ou chaîne 44.

Le câble 1 enroulé sur le tambour est relié à un tronçon de raccordement 40 connecté à une boîte de jonction 45 du type 2 → 1, dont les deux liaisons opposées sont raccordées respectivement aux deux roues 7B des dispositifs 6a et 6b. Par des tronçons de raccordement 40a et 40b.

Aux roues opposées 7A sont associés deux connecteurs respectifs 46a et 46b solidaires de l'arbre fixe 3, par exemple du type à accouplement axial, qui sont reliés, par des câbles fixes respectifs 5a et 5b, à une boîte de jonction 47 du type 2 → 1 dont l'autre borne unique est raccordée au câble fixe 5 lié à la structure fixe environnante. On notera que les connecteurs 46a et 46b sont agencés pour assurer une double fonction de connexion mécanique de la roue 7A à l'arbre fixe 3 et de connexion des câbles pour assurer la continuité de la ligne de transmission.

Le principe de fonctionnement de l'appareil 41 consiste à mettre en service un des deux dispositifs 6a, 6b tandis que l'autre est gardé en réserve et préparé pour prendre la relève du premier si le nombre de tours de rotation exécutés par le tambour excède la capacité de celui-ci, cette commande séquentielle de l'appareil étant assurée par des moyens de commande non représentés.

Ainsi, dans la configuration représentée à la fig. 8, c'est le dispositif compensateur 6a qui est en cours de fonctionnement (le connecteur 46a étant en position de connexion et le moteur 42a étant non excité) et apte à compenser un nombre prédéterminé de tours de rotation du tambour dans un sens donné. Durant cette période le dispositif compensateur 6b est hors circuit (le connecteur 46b étant déconnecté) tandis que, si cela est nécessaire, le moteur 42b est excité et entraîne la roue 7A correspondante de manière que le dispositif 6b soit prêt à assurer une fonction de compensation dans le même sens que le dispositif 6a.

Lorsque le dispositif 6a parvient vers la fin de sa capacité de compensation, le moteur 42b est désexcité et le connecteur 46b est connecté, ce qui met en service le dispositif 6b, tandis qu'inversement le connecteur 6a est déconnecté, ce qui a pour effet de découpler le dispositif 6a de l'arbre 3. Tandis que le dispositif 6b assure maintenant la compensation de rotation du tambour 2, le dispositif 6a peut être ramené par le moteur 42a à sa position initiale, prêt à prendre la relève du dispositif 6b si nécessaire.

La commande séquentielle appropriée de l'appareil peut être assurée par une unité de gestion électronique (non représentée) dont le détail de réalisation n'entre pas dans le cadre de la présente invention et qui peut être facilement réalisée par l'homme de l'art à partir des considérations qui précèdent.

Comme il va de soi et comme il résulte d'ailleurs déjà de ce qui précède, l'invention ne se limite nullement à ceux de ses modes d'application et de réalisation qui ont été plus particulièrement envisagés ; elle en embrasse, au contraire, toutes les variantes.

## Revendications

1. Dispositif (6) de compensation de rotation pour lien souple tel qu'un câble ou analogue, notamment un câble de transmission de signaux, enroulable et déroulable sur un tambour rotatif (2) qui peut effectuer un nombre prédéterminé de tours de rotation dans un sens et dans l'autre autour d'un arbre fixe (3), ledit dispositif comportant un tronçon de câble (13) de longueur donnée enroulé en plusieurs spirales successives entourant chacune l'arbre fixe et disposées côte-à-côte, les sens d'enroulement de ces spirales étant tous identiques et les enroulements s'effectuant alternativement du centre vers la périphérie pour une spirale et de la périphérie vers le centre pour la spirale voisine, l'extrémité libre de la première spirale étant fixe par rapport à l'arbre fixe (3) et l'extrémité libre de la dernière spirale étant solidaire du tambour rotatif (2) et raccordée au câble enroulé sur ledit tambour, et des moyens d'accouplement temporaires (29-32) étant prévus pour accoupler en rotation une spirale donnée avec la spirale de rang immédiatement précédent (considéré dans l'ordre à partir de la spirale raccordée au tambour rotatif) lorsque, au cours de la rotation du tambour rotatif, ladite spirale donnée a effectué un déplacement angulaire prédéterminé,

caractérisé en ce que les autres extrémités respectivement de la première et de la dernière spirales et les extrémités des spirales intermédiaires sont solidaires de supports flottants réunissant les extrémités correspondantes de deux spirales voisines au voisinage de l'arbre fixe (3) pour les extrémités intérieures des spirales et à la périphérie externe pour les extrémités extérieures des spirales, et en ce que les susdits moyens d'accouplement temporaires sont agencés pour que l'accouplement en rotation de ladite spirale donnée avec la spirale de rang immédiatement inférieur intervienne lorsque ladite spirale donnée a effectué un nombre préétabli, supérieur ou égal à deux, de tours de rotation.

2. Dispositif selon la revendication 1, caractérisé en ce que les supports flottants sont agencés pour que les extrémités correspondantes de deux spirales voisines, situées au voisinage de l'arbre fixe pour les extrémités intérieures des spirales ou situées à la périphérie externe pour les extrémités extérieures des spirales, soient reliées entre elles par des portions du câble enroulées en boucle sensiblement hélicoïdale.

3. Dispositif selon la revendication 1 ou 2, caractérisé en ce qu'aux moyens d'accouplement temporaire sont associés des moyens de comptage-décomptage (30) aptes à compter le nombre de tours de rotation effectués, dans un sens ou dans l'autre, par une spirale donnée dans la limite de son nombre de tours préétabli.

4. Dispositif selon l'une quelconque des revendications 1 à 3, caractérisé en ce que toutes les spirales sont identiques et en ce qu'elles sont toutes susceptibles d'autoriser le même nombre préétabli de tours de rotation du tambour.

5. Dispositif selon l'une quelconque des revendications 1 à 4, caractérisé en ce que le câble fixe (5) raccordé à l'extrémité de la première spirale solidaire de l'arbre fixe (3), le tronçon (13) de câble enroulé en plusieurs spirales dans le dispositif, et le câble (1) enroulable sur le tambour rotatif sont différents tronçons d'un seul câble unitaire, ce grâce à quoi la liaison entre la partie fixe du câble et la partie enroulable du câble est exempte de tout organe de raccordement ou de connexion.

6. Dispositif selon l'une quelconque des revendications 1 à 5, caractérisé en ce que chaque spirale est enfermée dans une cassette de forme générale discoïdale présentant une chambre intérieure annulaire (12) délimitée par deux parois latérales annulaires et deux parois périphériques respectivement intérieure et extérieure, les deux parois latérales étant mutuellement écartées d'une distance correspondant approximativement à la dimension transversale du câble et les deux parois périphériques étant munies d'une lumière ou analogue (21, 23) agencée pour le passage et le blocage du câble la traversant.

7. Dispositif selon la revendication 6, caractérisé en ce que les deux parois latérales délimitant une chambre appartiennent à deux pièces distinctes (7, 8), indépendantes l'une de l'autre en rotation.

8. Dispositif selon la revendication 7, caractérisé en ce que chaque pièce (7, 8) présente deux faces annulaires principales qui sont parallèles et qui constituent des parois latérales de deux chambres consécutives.

9. Dispositif selon la revendication 8, caractérisé en ce que les pièces sont alternativement
   – des roues (7) montées à libre rotation sur l'arbre fixe (3) et dont les faces latérales sont creusées pour définir une paroi latérale et la paroi périphérique extérieure de respectivement deux chambres
   – et des espaceurs annulaires (8) interposés entre deux roues consécutives et montés sur l'arbre fixe à libre rotation par rapport à celui-ci et par rapport aux deux roues qui l'encadrent, les faces latérales des espaceurs constituant les parois latérales de deux chambres consécutives appartenant à deux roues différentes.

10. Dispositif selon la revendication 9, caractérisé en ce que les roues (7) possèdent des moyeux (9) élargis, aboutés longitudinalement, et en ce que chaque espaceur (8) entoure les moyeux aboutés (9) de deux roues consécutives.

11. Dispositif selon la revendication 10, caractérisé en ce que chaque espaceur (8) possède un moyeu (19) plus épais que sa partie discoïale, lequel moyeu définit la paroi périphérique interne de chaque chambre (12).

12. Dispositif selon la revendication 11, caractérisé en ce qu'entre les moyeux coopérant des espaceurs et des roues sont interposés des manchons (15) et en ce que le moyeu (19) de chaque espaceur (8) et chaque manchon (15) associés sont mutuellement configurés de manière à définir entre eux une cavité annulaire (20) dans laquelle s'ouvrent les deux lumières (21) de passage du câble prévues respectivement dans les parois périphériques internes de deux chambres situées de part et d'autre d'un même espaceur, le câble s'étendant, entre les deux dites lumières, à l'intérieur de cette cavité annulaire en une boucle hélicoïdale ou un tronçon de boucle hélicoïdale.

13. Dispositif selon l'une quelconque des revendications 8 à 12, caratérisé en ce que la surface périphérique externe de chaque roue (8) est creusée d'une gouttière hélicoïdale (22) s'étendant entre les deux lumières ou analogues (23) traversant les parois périphériques externes des deux chambres consécutives (12) définies par cette roue.

14. Dispositif selon la revendication 13, caractérisé en ce que chaque roue (8) est entourée par une bague de protection (24) obturant la gouttière (22) et solidaire de la roue (8).

15. Dispositif selon la revendication 2 et l'une quelconque des revendicat-ions 9 à 14, caractérisé en ce que les moyens (30) de comptage-décomptage du nombre de tours d'une roue par rapport à la roue de rang précédent comprennent un organe d'indexage (29) et un organe (32) de commande de celui-ci supportés respectivement par l'espaceur et la roue adjacente à celui-ci.

16. Dispositif selon la revendication 15, caractérisé ce que les moyens de comptage-décomptage comprennent en outre des moyens démultiplicateurs agencés pour qu'un espaceur soit entraîné en rotation par la roue de rang suivant, à une vitesse inférieure à celle de cette dernière.

17. Dispositif selon la revendication 16, caractérisé en ce que les moyens démultiplicateurs sont agencés de la façon suivante :
   – les bagues (24) de protection des roues sont dentées extérieurement (en 26),
   – chaque espaceur (8) supporte deux roues dentées (28) engrenant l'une avec l'autre et respectivement avec les bagues dentées (26) des deux roues (7) situées de part et d'autre de l'espaceur,
   pour former un accouplement différentiel dans lequel l'espaceur tourne à une vitesse réduite dans un rapport prédéterminé par rapport à la roue qui l'entraîne.

18. Dispositif selon l'une quelconque des revendications précédentes, caractérisé en ce que le câble est un câble comportant des fibres optiques.

19. Dispositif selon la revendication 18, caractérisé en ce que le câble est un câble plat comportant plusieurs fibres optiques juxtaposées.

20. Dispositif de compensation de rotation pour un câble ou analogue, notamment un câble de transmission de signaux, enroulable et déroulable sur un tambour rotatif qui peut effectuer un nombre indéterminé de tours de rotation dans un sens ou dans l'autre autour d'un arbre fixe, caractérisé en ce qu'il comporte :

– deux dispositifs primaires (6a, 6b) de compensation de rotation selon l'une quelconque des revendications 1 à 19, prévus chacun pour compenser un nombre prédéterminé de tours de rotation du tambour, ces deux dispositifs étant montés sur l'arbre fixe (3) du tambour (2),

– des premiers moyens de jonction (47) pour raccorder le câble fixe (5) situé en amont du tambour aux extrémités libres des deux premières spirales (7A) fixes appartenant respectivement aux deux dispositifs primaires,

– des seconds moyens de jonction (45) pour raccorder le câble (1, 40) enroulé sur le tambour aux extrémités libres des deux dernières spirales (7B) entraînées par le tambour (2) et appartenant respectivement aux deux dispositifs primaires,

– deux organes de connexion amovibles (46a, 46b) pour raccorder les deux câbles issus des premiers moyens de jonction (47) respectivement aux deux spirales correspondantes (7A),

– deux moyens moteurs (42a, 42b) aptes à faire tourner respectivement les deux dispositifs primaires (6a, 6b),

– et des moyens de commande agencés pour, lorsque le tambour est entraîné en rotation avec un nombre de tours excédant la capacité de compensation d'un des dispositifs primaires,

* déconnecter l'organe de connexion de ce dispositif primaire en même temps que l'organe de connexion de l'autre dispositif primaire est connecté de manière à assurer la continuité du circuit,

* pendant que l'autre dispositif primaire compense la rotation du tambour, mettre en marche les moyens moteurs du dispositif primaire parvenu en fin de course pour le ramener à sa capacité de compensation maximale compte tenu du sens de rotation du tambour,

* inverser les fonctionnements lorsque l'autre dispositif primaire parvient à son tour en fin de capacité de compensation,

* et poursuivre en mettant en fonction alternativement l'un, puis l'autre dispositif primaire tandis que celui qui n'est pas en fonction est ramené en position initiale.

FIG.1.

FIG.7.

FIG.2.

# FIG.3.

# FIG.4.

# FIG.5.

27

22

26

23

24

25

23

11

10

7

# FIG.6.

8

29

28

# FIG.8.

EP 0 443 922 A1

Office européen
des brevets

# RAPPORT DE RECHERCHE EUROPEENNE

Numero de la demande

EP 91 40 0399

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | GB-A-1071784 (FAIREY ENGINEERING LTD.) <br> * page 2, ligne 32 – page 3, ligne 73 * | 1, 4, 5 | B65H75/34 |
| A | | 6-8 | |
| | --- | | |
| | ----- | | |

**DOMAINES TECHNIQUES RECHERCHES (Int. Cl.5)**

B65H

Le présent rapport a été établi pour toutes les revendications

| Lieu de la recherche | Date d'achèvement de la recherche | Examinateur |
|---|---|---|
| LA HAYE | 22 MAI 1991 | GOODALL C.J. |

EPO FORM 1503 03.82 (P0402)